# EUROPÄISCHE PATENTANMELDUNG

(11) **EP 0 995 636 A2**
(43) Veröffentlichungstag der Anmeldung: **26.04.2000**
(21) Anmeldenummer: 99116198.5
(22) Anmeldetag: 24.08.1999
(51) Int. Cl.: B60R 16/02

(54) **Tülle für ein Kabelbündel**

(30) Priorität: 22.10.1998 DE 19848651
(71) Anmelder: Dr.Ing. h.c.F. Porsche Aktiengesellschaft, 70435 Stuttgart (DE)
(72) Erfinder: Dagtekin, Mehmet-Emin, 70191 Stuttgart (DE)

(57) **Zusammenfassung**

Die Erfindung betrifft eine Tülle zur Führung eines Kabelbündels durch eine Karosserieöffnung mit einem Stopfen korrespondierend zur arosserieöffnung und einem abgewinkelten Tüllenabschnitt auf einer Seite des Stopfens. Um eine Tülle für ein Kabelbündel zu schaffen, die einen abgewinkelten Ein- und Austritt des Kabelbündels ermöglicht, wird vorgeschlagen, an einem zur Karosserieöffnung korrespondierenden Stopfen auf der einen Seite einen abgewinkelten Tüllenabschnitt und auf der anderen Seite einen geraden Tüllenabschnitt anzuordnen, wobei am geraden Tüllenabschnitt Haltemittel zum Festlegen des geraden Tüllenabschnittes an der Karosserie vorgesehen sind.

## Beschreibung

Die Erfindung betrifft eine Tülle zur Führung eines Kabelbündels durch eine Karosserieöffnung.

Derartige Tüllen sind in vielfacher Ausführung bekannt und führen in der Regel ein Kabelbündel gerade durch eine Karosserieöffnung, d.h. senkrecht zu einer Karosserieoberfläche. Es sind ebenfalls Kabeltüllen bekannt, die einseitig abgewinkelt sind, so daß auf einer Seite der Karosserieöffnung das Kabelbündel gerade eintritt, um auf der anderen Seite abgewinkelt und nun parallel zur Karosserieoberfläche auszutreten.

Gegenüber diesem Stand der Technik ist es nun Aufgabe der Erfindung, eine Tülle für ein Kabelbündel zu schaffen, die einen abgewinkelten Ein- und Austritt des Kabelbündels ermöglicht.

Diese Aufgabe wird erfindungsgemäß mit den Merkmalen des Patentanspruches 1 gelöst. Hierzu wird vorgeschlagen, an einem zur Karosserieöffnung korrespondierenden Stopfen auf der einen Seite einen abgewinkelten Tüllenabschnitt und auf der anderen Seite einen geraden Tüllenabschnitt anzuordnen, wobei am geraden Tüllenabschnitt Haltemittel zum Festlegen des geraden Tüllenabschnittes an der Karosserie vorgesehen sind. In vorteilhafter Weise ist es mit einer derartigen Tülle möglich, ein Kabelbündel sowie eintritts- wie auch austrittsseitig parallel zur Karosserieoberfläche zu führen. Dadurch, daß nur einer der beiden Tüllenabschnitte abgewinkelt ausgebildet ist, läßt sich die erfindungsgemäße Tülle einfach und kostensparend fertigen, da zur Fertigung der Tülle im Spritzverfahren nur zwei Kerne vorzusehen sind: Ein erster Kern reicht durch den geraden Tüllenabschnitt hindurch bis zu einem Knie des abgewinkelten Tüllenabschnittes und ein zweiter Kern reicht vom Austritt des zweiten Tüllenabschnittes bis zum Knie, wo er sich am ersten Kern abstützen kann. Trotz der geraden Ausbildung des zweiten Tüllenabschnittes ist das Kabelbündel sicher parallel zur Karosserieoberfläche geführt, da durch die am zweiten Tüllenabschnitt angeordneten Haltemittel dieser nach der Montage abgewinkelt und austrittsseitig parallel zur Karosserieoberfläche ausgerichtet wird.

Vorteilhafte Weiterbildungen der Erfindung sind in den Unteransprüchen beschrieben.

So wird vorgeschlagen, die Haltemittel an den geraden Tüllenabschnitt anzuformen. Auf diese Weise ist zur Herstellung der Haltemittel über den Prozeß zur Herstellung der Tülle hinaus kein weiterer Produktions- oder Arbeitsschritt notwendig.

Ferner wird vorgeschlagen, den Ansatzbereich des geraden Tüllenabschnittes an den Stopfen faltenförmig auszubilden. Durch diese Ausbildung wird ein definierter Knickbereich erzeugt, der zum einen die Lage der Abknickung eindeutig festlegt und zum anderen dafür sorgt, daß auch im angeknickten Bereich des geraden Tüllenabschnittes keine erhöhten Materialspannungen und damit möglicherweise Materialrisse auftreten.

Die Erfindung ist nachstehend anhand des in den Figuren dargestellten Ausführungsbeispieles näher erläutert. Es zeigen
- Fig. 1: eine erste Ansicht einer Tülle,
- Fig. 2: eine um 90° gedrehte Ansicht der Tülle und
- Fig. 3: einen Schnitt durch die Tülle.

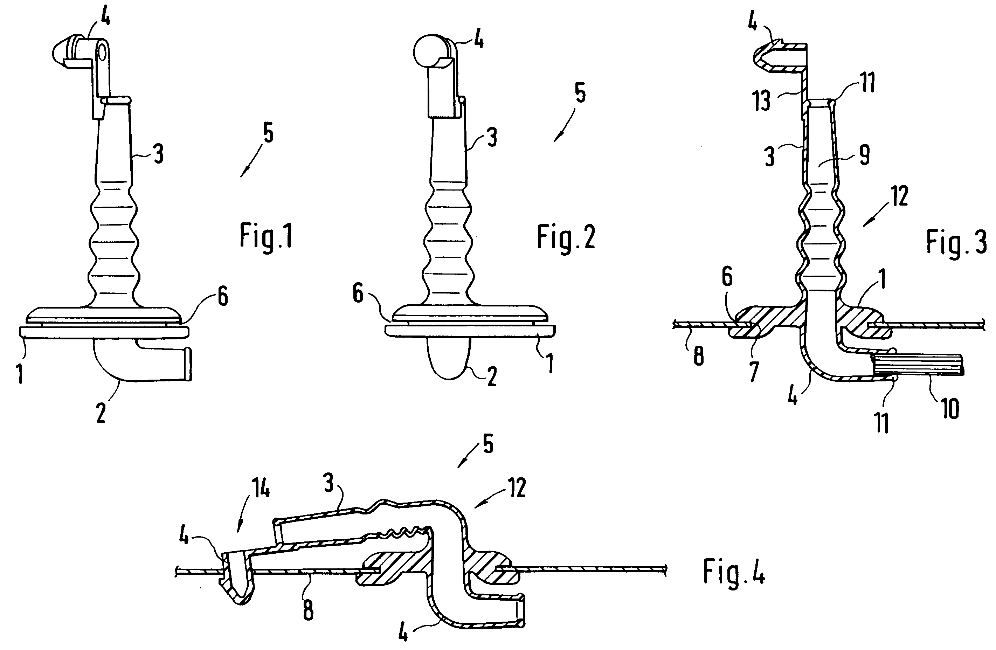

Die in Fig. 1 in einer seitlichen Ansicht dargestellte Tülle 1 besteht aus einem Stopfen 1 an den auf einer Seite ein abgewinkelter Tüllenabschnitt 2 und auf der anderen Seite ein gerader Tüllenabschnitt 3 angeordnet ist. Der gerade Tüllenabschnitt 3 trägt endseits ein pilzförmiges Haltemittel 4. Der Stopfen 1, die Tüllenabschnitte 2 und 3 sowie das Haltemittel 4 bilden zusammen eine einstückig ausgeformte Tülle 5.

Wie in Fig. 3 dargestellt, ist eine am Stopfen 3 umlaufend angeformte Nut 6 so ausgebildet, daß sie zu einer Öffnung 7 eines Karosseriebleches 8 korrespondiert und der Stopfen 1 somit dichtend in der Öffnung 7 gehalten ist. Die Tülle 5 weist ferner einen durchgängigen Hohlraum 9 auf, der der Stopfen 1 und die Tüllenabschnitte 3 und 4 durchdringt. Der Hohlraum 9 dient zur Aufnahme eines nur ansatzweise dargestellten Kabelbündels 10. An den Tüllenabschnitten 3 und 4 sind endseits jeweils Dichtabschnitte 11 angeformt, die für einen dichten Anschluß der Tülle 5 an das Kabelbündel 10 sorgen.

Der zweite Tüllenabschnitt 4 ist abgewinkelt ausgeführt und weist gerade Wandabschnitte auf. Demgegenüber ist der erste Tüllenabschnitt 3 gerade ausgeführt und weist an seinem Übergangsbereich zum Stopfen 1 ein wellenförmiges Wandprofil 12 auf, das in diesem Bereich eine Faltenbildung erleichtert.

Das pilzförmige Haltemittel 4 ist etwas entfernt vom Austritt des Kabelbündels 10 aus dem ersten Tüllenabschnitt 3, der durch das Dichtelement 11 gebildet ist, durch einen Steg 13 beabstandet gehalten, um das Haltemittel 4 auch bei eingezogenem Kabelbündel 10 separat ergreifen zu können.

Fig. 4 zeigt schließlich die Tülle 5 im endgültig montierten Zustand. Hier ist das Haltemittel 4 in einer weiteren Öffnung 14 der Karosserie 8 verrastet und der erste Tüllenabschnitt 3 ist nun in seinem wellenförmigen Bereich 12 abgeknickt. Beide Tüllenabschnitte 3 und 4 verlaufen nun in etwa parallel zur Oberfläche der Karosserie 8.

## Patentansprüche

1. Tülle (5) für ein Kabelbündel (10) zum Einsetzen in einer Karosserieöffnung (7) mit einem Stopfen (1) korrespondierend zur Karosserieöffnung und einem abgewinkelten Tüllenabschnitt (4) auf einer Seite des Stopfens, dadurch gekennzeichnet, daß auf der gegenüberliegenden Seite des Stopfens 1 ein gerader Tüllenabschnitt 3 vorgesehen ist, der ein Haltemittel (4) zum Festlegen des geraden Tüllenabschnittes an einer Karosserie (8) aufweist.

2. Tülle nach Anspruch 1, dadurch gekennzeichnet, daß das Haltemittel (4) an den geraden Tüllenabschnitt (3) angeformt ist.

3. Tülle nach Anspruch 2, dadurch gekennzeichnet, daß das Haltemittel (4) pilzförmig ausgebildet und über einen Steg (13) mit dem geraden Tüllenabschnitt (3) verbunden ist.

4. Tülle nach Anspruch 1, 2 oder 3, dadurch gekennzeichnet, daß am geraden Tüllenabschnitt (4) im Bereich (12) eines Ansatzes an den Stopfen (1) eine Wandung des Tüllenabschnittes wellen- oder faltenförmig ausgebildet ist.
